# EUROPEAN PATENT APPLICATION

(11) **EP 4 807 146 A1**
(43) Date of publication of application: **16.09.2026**
(21) Application number: 26164810.9
(22) Date of filing: 13.03.2026
(51) Int. Cl.: F01D 21/00, F01D 25/20

(54) **BEARING COMPARTMENT LUBRICATION SYSTEM WITH CHECK VALVE OPERATION AT ENGINE SHUTDOWN**

(30) Priority: 14.03.2025 US 202519080354
(71) Applicant: RTX Corporation, Farmington, CT 06032 (US)
(72) Inventor: GNITZCAVICH, Nicholas Daniel, Farmington, 06032 (US); YELLE, Jesse, Farmington, 06032 (US); SHEIL, Robert F., Farmington, 06032 (US); AVIS, Thomas B., Farmington, 06032 (US); DUNN, Teagan L., Farmington, 06032 (US); DEFAZIO, Katherine M., Farmington, 06032 (US); PARNIN, Francis, Farmington, 06032 (US)
(74) Representative: Dehns

(57) **Abstract**

A gas turbine engine (20) includes a propulsor (22), a compressor section (24), and a turbine section (28). The propulsor (22), the compressor section (24) and the turbine section (28) include rotors for rotation with at least one shaft (104). At least one bearing compartment (112, 114) includes at least one bearing (108) for supporting the at least one shaft (104). A lubricant supply system (111) supplies lubricant to the at least one bearing (108), and into the at least one bearing compartment (112, 114). The lubricant supply system (111) includes a pump (124) for delivering lubricant into an oil supply tube (110, 129) when the engine (20) is operating for communicating the lubricant into the at least one bearing compartment (112, 114). A check valve (130) is on a fluid line (97) intermediate the pump (124) and the oil supply tube (110, 129). The check valve (130) allows flow of lubricant from the pump (124) into the at least one bearing compartment (112, 114) when the engine (20) is operating, and resists migration of lubricant from the oil supply tube (110, 129) when the engine (20) is shut down. A method is also disclosed.

## Description

### BACKGROUND OF THE INVENTION

This application relates to a gas turbine engine with a bearing compartment lubrication system that includes a check valve arrangement to maintain lubricant in supply tubes at engine shutdown.

Gas turbine engines are known, and typically include a propulsor delivering air as propulsion air, and delivering air into a core engine. The core engine includes a compressor section that compresses the air and delivers it into a combustor. The air is mixed with fuel and ignited, and products of this combustion pass downstream over a turbine section.

It is known to have a plurality of rotors in the propulsor, compressor and turbine sections supported on bearings. These bearings are supplied with lubricant such that they operate to support a shaft rotating with the rotors.

There are challenges with supplying lubricant to the bearings.

### SUMMARY OF THE INVENTION

According to an aspect of the present invention, a gas turbine engine includes a propulsor, a compressor section, and a turbine section. The propulsor, the compressor section and the turbine section include rotors for rotation with at least one shaft. At least one bearing compartment includes at least one bearing for supporting the at least one shaft. A lubricant supply system supplies lubricant to the at least one bearing, and into the at least one bearing compartment. The lubricant supply system includes a pump for delivering lubricant into an oil supply tube when the engine is operating for communicating the lubricant into the at least one bearing compartment. A check valve is on a fluid line intermediate the pump and the oil supply tube. The check valve allows flow of lubricant from the pump into the at least one bearing compartment when the engine is operating, and resists migration of lubricant from the oil supply tube when the engine is shut down.

Optionally, and in accordance with the above, there is a second of the at least one bearing compartment including at least a second bearing and a second of the oil supply tube for delivering lubricant to the second bearing compartment when the oil pump is operating, and the check valve allowing flow of the lubricant from the pump into the second oil supply tube when the engine is running, and resisting migration of the lubricant from the second oil supply tube when the engine is shut down.

Optionally, and in accordance with any of the above, there is a single check valve for resisting migration of the lubricant from the first and second oil supply tubes at engine shut down.

Optionally, and in accordance with any of the above, the first and second bearing compartments are in the turbine section.

Optionally, and in accordance with any of the above, the first and second oil supply tubes are adjacent a static vane in the turbine section.

Optionally, and in accordance with any of the above, the check valve is positioned on a main oil supply tube communicating to both of the at least two oil supply tubes, and is open to allow flow of the lubricant to the first oil supply tube when the engine is running, and blocking migration of the lubricant from the first oil supply tubes when the engine is stopped.

Optionally, and in accordance with any of the above, there is an air breather tube and an anti-siphon meter on the air breather tube communicating downstream of the pump.

Optionally, and in accordance with any of the above, the breather tube communicates intermediate the pump and the check valve.

Optionally, and in accordance with any of the above, there is an air breather tube and the check valve is on the air breather tube, the check valve blocking flow of the lubricant when the engine is running but allowing flow of air through the air breather tube into the at least one oil supply tube when the engine is shut down.

Optionally, and in accordance with any of the above, the first and second bearing compartments are in the turbine section.

Optionally, and in accordance with any of the above, the first and second oil supply tubes are adjacent a static vane in the turbine section.

Optionally, and in accordance with any of the above, the check valve is positioned in the at least one oil supply tube, and is open to allow flow of the lubricant to the at least one oil supply tube when the engine is running, and blocking migration of the lubricant from the at least one oil supply tube when the engine is stopped.

Optionally, and in accordance with any of the above, there is an air breather tube and an anti-siphon meter on the air breather tube communicating downstream of the pump.

Optionally, and in accordance with any of the above, the breather tube communicates intermediate the pump and the check valve.

Optionally, and in accordance with any of the above, there is an air breather tube and the check valve is on the air breather tube, the check valve blocking flow of the lubricant when the engine is running but allowing flow of air through the air breather tube when the engine is shut down.

According to another aspect of the present invention, a method of operating a gas turbine engine includes the steps of 1) mounting a rotor to rotate with a shaft, 2) supporting the shaft with at least one bearing received within at least one bearing compartment, 3) operating the engine and supplying lubricant into the at least one bearing compartment while the engine is operating, 4) shutting down the engine and 5) providing a check valve on a fluid line downstream of a pump that is supplying the lubricant to the at least one bearing compartment, with the at least one check valve allowing lubricant to flow to the at least one bearing compartment when the engine is operating, and resisting migration of the lubricant from an oil supply tube back toward the pump when the engine is shut down.

Optionally, and in accordance with the above, there is a second of the at least one bearing compartment including at least a second of the bearing and a second said oil supply tube for delivering lubricant to the second bearing compartment when the oil pump is operating, and the check valve also allowing flow of the lubricant from the pump into the second oil supply tube when the engine is running, and also resisting migration of the lubricant from the second oil supply tube when the engine is shut down.

Optionally, and in accordance with any of the above, the first and second bearing compartments are in the turbine section.

Optionally, and in accordance with any of the above, the check valve is positioned in the at least one oil supply tube, and is open to allow flow of the lubricant to the at least one oil supply tube when the engine is running, and blocking migration of the lubricant from the at least one oil supply tubes when the engine is stopped.

Optionally, and in accordance with any of the above, there is an air breather tube and the check valve is on the air breather tube, the check valve blocking flow of the lubricant when the engine is running but allowing flow of air through the air breather tube when the engine is shut down.

The present invention may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A schematically shows a turbine section that may be incorporated into the gas turbine engine of Figure 1.
Figure 2B is a cross-section along line B-B of Figure 2A.
Figure 3A shows a bearing compartment oil supply system while the engine is running.
Figure 3B shows a challenge that exists at engine shutdown.
Figure 4 shows the Figure 3A system at engine shutdown.
Figure 5 shows an alternative bearing compartment oil engine supply system during engine operation.
Figure 6 illustrates the alternative bearing compartment oil supply system of Figure 5 at engine shutdown.

### DETAILED DESCRIPTION

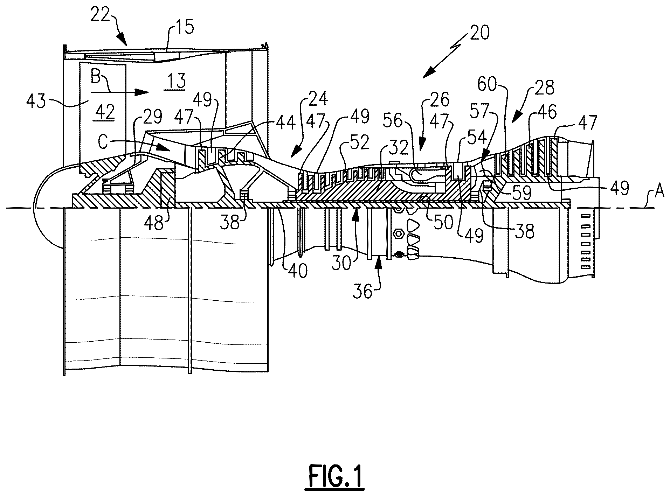

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 degrees Celsius (°C)). The TET may be greater than or equal to 2700.0 °F (1480 °C), or more narrowly less than or equal to 3500.0 °F (1930 °C), such as between 2750.0 °F and 3350.0 °F (between 1510 °C and 1840 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (538 °C), or more narrowly greater than or equal to 800.0 °F (427 °C), such as between 900.0 °F and 975.0 °F (between 482 °C and 524 °C). The relatively low EGT can be utilized in combination with the other techniques disclosed herein to reduce fuel consumption.

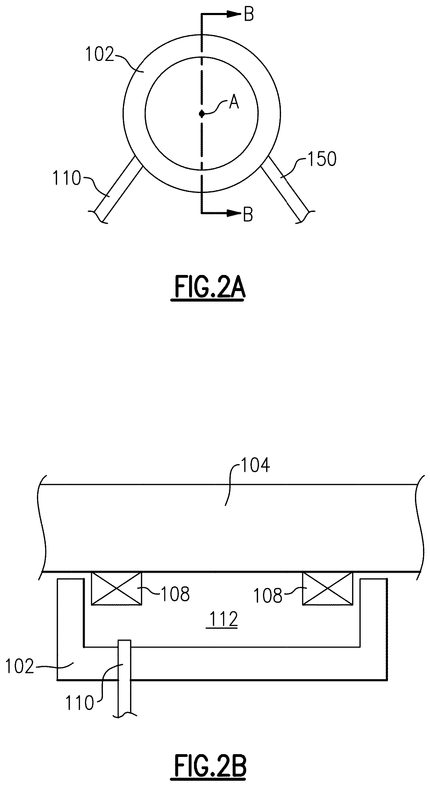

Figure 2A shows a bearing housing 102 that may be in a mid-turbine frame. Oil is supplied into housing 102 from supply lines 110. A scavenge line 150 is also shown. As shown, lines 110 and 150 are at a vertically lower location.

Bearing housing 102 is shown in Figure 2B. Bearings 108 support rotation of a shaft 104. An oil supply tube 110 is shown schematically for delivering oil into a bearing compartment 112 receiving the bearings 108.

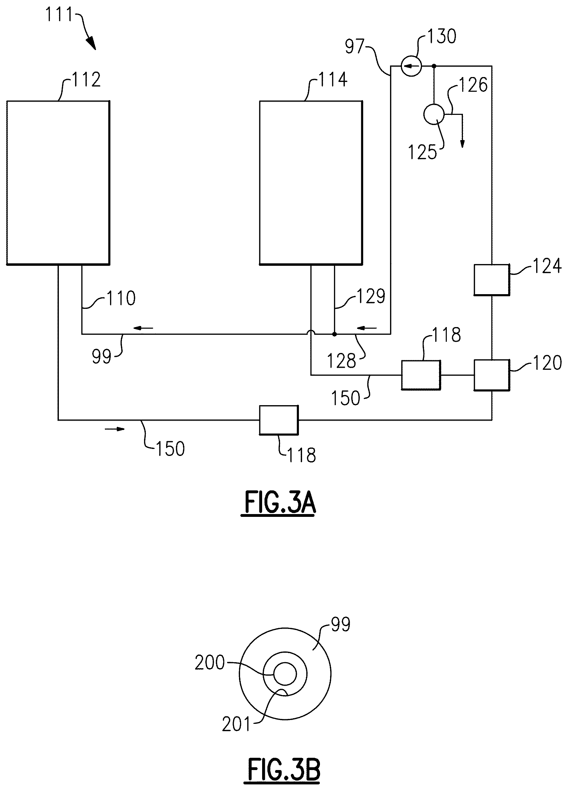

An oil supply system 111 is shown in Figure 3A for delivering oil to the bearing compartment 112, and a second bearing compartment 114. While the system 111 is shown providing lubrication to the turbine section 100, a similar system could be utilized for providing lubrication to bearings in other locations.

An oil supply tube 99 is shown delivering oil to line 110, and into bearing compartment 112. A scavenge pump 118 removes oil from the bearing compartments 112 and 114, and delivers it into an oil tank 120. A pump 124 is shown delivering oil through an anti-siphon meter 125 selectively communicating with an air breather passage 126. Downstream of the anti-siphon meter, the oil reaches a supply line 97, then moves into a tube 128.

The tube 128 communicates with a tube 129 and tube 99 for delivering lubricant into the bearing compartments 112 and 114.

In a disclosed embodiment, the supply lines 110 and 129 are vertically below the bearing compartments 112 and 114.

Downstream of the oil supply pump 124 the oil encounters a breather tube 126 which would normally be shut down by an anti-siphon meter 125 during engine operation. The oil also passes through a check valve 130 which is shown open, and allows oil to flow into a supply tube 97, and then into a supply tube 128. Oil in the supply tube 128 may pass into a tube 129, and into bearing compartment 114. The oil from line 128 also passes into an oil supply tube 99, and tube 110 into bearing compartment 112.

Figure 3B is a schematic view which may be a cross-section through a tube 99 (or others of the supply tubes) as may have been found in the prior art at shut down. As shown, a thin film of lubricant 200 may adhere to an inner wall 201 of the tube 99.

As known, the turbine section will be extremely hot, and this could lead to coking of the lubricant 200 on the tubes 110 and 129.

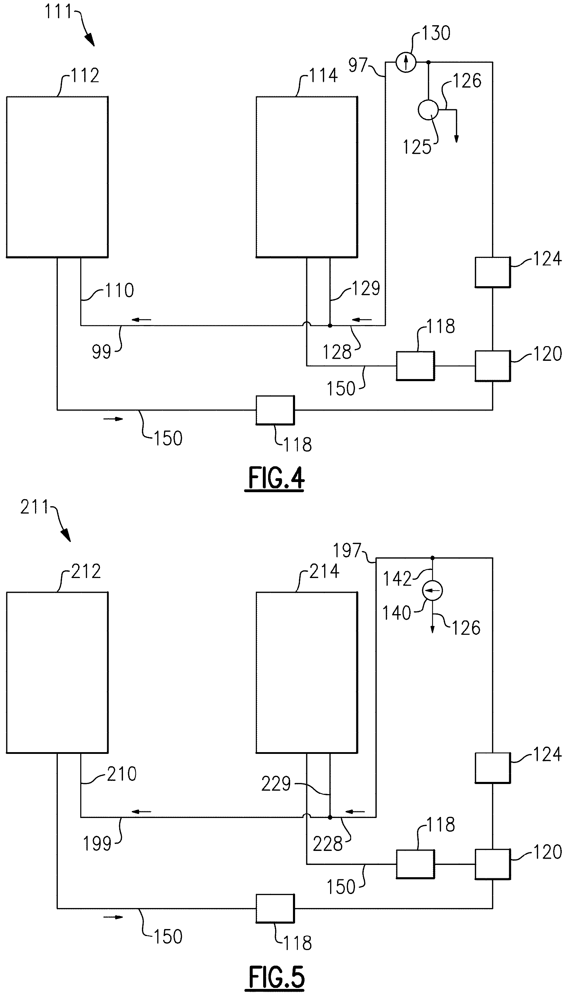

Figure 4 shows the bearing compartment oil supply system 111 at engine shut down. As shown, the check valve 130 now moves to a closed position, and will block migration of the oil from the oil supply tubes 110, 99, 129 and 128. The condition as illustrated with regard to Figure 3B is now addressed, as the tubes remain full or at least close to full.

Figure 5 shows an alternative bearing supply system 211. Elements with a common function that are the same number as found in Figure 3A, however, moved up by 100. Here, the check valve 140 is mounted on the breather tube 142. When the pump 124 is operating the check valve 140 will be kept closed due to the pressure in the tube 142. The oil supply will function as normal during engine operation.

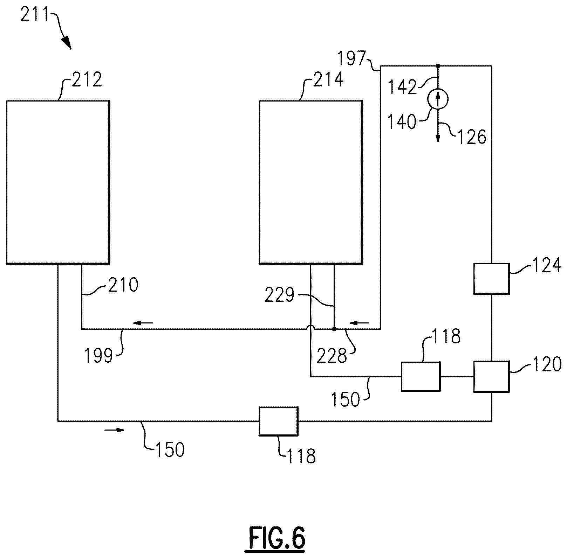

Figure 6 shows the system 211 at shutdown. Now, the check valve 140 moves to be open, as the pressure upstream of the check valve in line 126 is greater than the pressure downstream of tube 142. This will drive air into the tube 197 and resisting migration of the oil outwardly of the oil supply tubes.

An anti-siphon meter differs from this embodiment in that an anti-siphon meter is a flow restrictor, and not a check valve.

A gas turbine engine under this invention could be said to include a propulsor, a compressor section and a turbine section. The propulsor, the compressor section and the turbine section include rotors for rotation with at least one shaft. At least one bearing compartment includes at least one bearing for supporting the at least one shaft. A lubricant supply system supplies lubricant to the at least one bearing, and into the at least one bearing compartment. The lubricant supply system includes a pump for delivering lubricant into an oil supply tube when the engine is operating for communicating the lubricant into the at least one bearing compartment. A check valve is on a fluid line intermediate the pump and the oil supply tube. The check valve allows flow of lubricant from the pump into the at least one bearing compartment when the engine is operating, and resisting migration of lubricant from the oil supply tube when the engine is shut down.

A method of operating a gas turbine engine under this invention could be said to include the steps of 1) mounting a rotor to rotate with a shaft, 2) supporting said shaft with at least one bearing received within at least one bearing compartment, 3) operating the engine and supplying lubricant into the at least one bearing compartment while the engine is operating, 4) shutting down the engine and 5) providing a check valve on a fluid line downstream of a pump that is supplying the lubricant to the at least one bearing compartment, with the at least one check valve allowing lubricant to flow to the at least one bearing compartment when the engine is operating, and resisting migration of the lubricant from an oil supply tube back toward the pump when the engine is shut down.

Although embodiments of this invention have been shown, a worker of skill in this art would recognize that modifications would come within the scope of this invention. For that reason, the following claims should be studied to determine the true scope and content of this invention.

## Claims

1. A gas turbine engine (20) comprising:
a propulsor (22);
a compressor section (24);
a turbine section (28);
the propulsor (22), the compressor section (24) and the turbine section (28) including rotors for rotation with at least one shaft (104);
at least one bearing compartment (112; 212) including at least one bearing (108) for supporting said at least one shaft (104);
a lubricant supply system (111; 211) to supply lubricant to the at least one bearing (108), and into the at least one bearing compartment (112; 212), said lubricant supply system (111; 211) including a pump (124) for delivering lubricant into an oil supply tube (110; 210) when the engine (20) is operating for communicating the lubricant into the at least one bearing compartment (112; 212); and
a check valve (130; 140) on a fluid line (97; 126) intermediate said pump (124) and said oil supply tube (110; 210), said check valve (130; 140) allowing flow of lubricant from the pump (124) into the at least one bearing compartment (112; 212) when the engine (20) is operating, and resisting migration of lubricant from the oil supply tube (110; 210) when the engine (20) is shut down.

2. The gas turbine engine (20) as set forth in claim 1, wherein there is a second of said at least one bearing compartment (114; 214) including at least a second bearing (108) and a second of said oil supply tube (129; 229) for delivering lubricant to the second bearing compartment (114; 214) when the oil pump (124) is operating, and said check valve (130; 140) allowing flow of the lubricant from the pump (124) into the second oil supply tube (129; 229) when the engine (20) is running, and resisting migration of the lubricant from the second oil supply tube (129; 229) when the engine (20) is shut down.

3. The gas turbine engine (20) as set forth in claim 2, wherein there is a single check valve (130; 140) for resisting migration of the lubricant from the first and second oil supply tubes (110, 129; 210, 229) at engine shut down.

4. The gas turbine engine (20) as set forth in claim 2 or 3, wherein the first and second bearing compartments (112, 114; 212, 214) are in the turbine section (28), and wherein, optionally, the first and second oil supply tubes (110, 129; 210, 229) are adjacent a static vane (49) in the turbine section (28).

5. The gas turbine engine (20) as set forth in any of claims 2 to 4, wherein the check valve (130) is positioned in a main oil supply tube (97) communicating to both of the at least two oil supply tubes (110, 129), and is open to allow flow of the lubricant to the at least two oil supply tubes (110 210) when the engine (20) is running, and blocking migration of the lubricant from the at least two oil supply tubes (110; 210) when the engine (20) is stopped.

6. The gas turbine engine (20) as set forth in any of claims 1 to 4, wherein the check valve (130) is positioned in the at least one oil supply tube (110, 129), and is open to allow flow of the lubricant to the at least one oil supply tube (110, 129) when the engine (20) is running, and blocking migration of the lubricant from the at least one oil supply tube (110, 129) when the engine (20) is stopped.

7. The gas turbine engine (20) as set forth in any preceding claim, wherein there is an air breather tube (126) and an anti-siphon meter (125) on the air breather tube (126) communicating downstream of the pump (124).

8. The gas turbine engine (20) as set forth in claim 7, wherein the breather tube (126) communicates intermediate the pump (124) and the check valve (130).

9. The gas turbine engine (20) as set forth in any of claims 1 to 4, wherein there is an air breather tube (142) and the check valve (140) is on the air breather tube (142), the check valve (140) blocking flow of the lubricant when the engine (20) is running but allowing flow of air through the air breather tube (142) into the at least one oil supply tube (210, 229) when the engine (20) is shut down.

10. The gas turbine engine (20) as set forth in any preceding claim, wherein the at least one bearing compartment (112; 212) is in the turbine section (28), and wherein, optionally, the oil supply tube (110; 210) is adjacent a static vane (49) in the turbine section (28).

11. A method of operating a gas turbine engine (20) comprising the steps of:
1) mounting a rotor (22) to rotate with a shaft (104);
2) supporting said shaft (104) with at least one bearing (108) received within at least one bearing compartment (112; 212);
3) operating the engine (20) and supplying lubricant into the at least one bearing compartment (112; 212) while the engine (20) is operating;
4) shutting down the engine (20); and
5) providing a check valve (130; 140) on a fluid line (97; 126) downstream of a pump (124) that is supplying the lubricant to the at least one bearing compartment (112; 212), with the at least one check valve (130; 140) allowing lubricant to flow to the at least one bearing compartment (112; 212) when the engine (20) is operating, and resisting migration of the lubricant from an oil supply tube (110; 210) back toward the pump (124) when the engine (20) is shut down.

12. The method as set forth in claim 11, wherein there is a second of said at least one bearing compartment (114; 214) including at least a second of said bearing (108) and a second said oil supply tube (129; 229) for delivering lubricant to the second bearing compartment (114; 214) when the oil pump (124) is operating, and said check valve (130; 140) also allowing flow of the lubricant from the pump (124) into the second oil supply tube (129; 229) when the engine (20) is running, and also resisting migration of the lubricant from the second oil supply tube (129; 229) when the engine (20) is shut down.

13. The method as set forth in claim 12, wherein the first and second bearing compartments (112, 114; 212, 214) are in the turbine section (28).

14. The method as set forth in claim any of claims 11 to 13, wherein the check valve (130) is positioned in a main oil supply tube (97), and is open to allow flow of the lubricant to the at least one oil supply tube (110; 210) when the engine (20) is running, and blocking migration of the lubricant from the at least one oil supply tube (110; 210) when the engine (20) is stopped.

15. The method as set forth in any of claims 11 to 13, wherein there is an air breather tube (142) and the check valve (140) is on the air breather tube (142), the check valve (140) blocking flow of the lubricant when the engine (20) is running but allowing flow of air through the air breather tube (142) when the engine (20) is shut down.
